# EUROPÄISCHE PATENTSCHRIFT

(11) **EP 2 303 523 B1**
(45) Veröffentlichungstag und Bekanntmachung des Hinweises auf die Patenterteilung: **20.06.2012**
(21) Anmeldenummer: 09772157.5
(22) Anmeldetag: 01.07.2009
(51) Int. Cl.: B25J 13/08, B23Q 7/04

(54) **BEARBEITUNGSANLAGE FÜR WERKSTÜCKE**
MACHINING INSTALLATION FOR WORKPIECES
INSTALLATION D'USINAGE DE PIÈCES

(30) Priorität: 03.07.2008 DE 102008031487
(43) Veröffentlichungstag der Anmeldung: 06.04.2011
(73) Patentinhaber: Mag Europe GmbH, 73033 Göppingen (DE)
(72) Erfinder: MEIDAR, Moshe Israel, New York, NY 10022 (US); HORN, Wolfgang, 73035 Göppingen (DE); SCHMALZRIED, Siegfried, 78224 Singen (DE); HAUS, Waldemar, 71364 Winnenden (DE)
(74) Vertreter: Rau, Schneck & Hübner
(86) Internationale Anmeldenummer: PCT/EP2009/004746
(87) Internationale Veröffentlichungsnummer: WO 2010/000457

(56) Entgegenhaltungen:
- EP-A- 0 381 602
- WO-A-91/04522
- US-A1- 2006 048 364

## Beschreibung

Die Erfindung betrifft eine Bearbeitungsanlage für Werkstücke gemäß dem Oberbegriff des Anspruchs 1.

Aus der EP 1 155 771 A2 ist eine als Werkzeugmaschine ausgebildete Bearbeitungsanlage für Werkstücke bekannt. Zum Positionieren der Werkstückträger sowie der Werkzeugspindel sind mehrere Schlitten vorgesehen, die auf zugehörigen Führungsschienen verfahrbar sind. Die Beschickung der Werkzeugmaschine erfolgt mittels einer Transporteinrichtung, die die Werkstückträger mit den darauf angeordneten Werkstücken einem der Schlitten zuführt und nach der Bearbeitung wieder abführt. Mit der beschriebenen Werkzeugmaschine ist zwar eine hohe Bearbeitungsgenauigkeit erzielbar, jedoch ist die Werkzeugmaschine in der Herstellung aufwändig und teuer.

Aus der WO 91/04522 A1 ist eine Bearbeitungsanlage bekannt, die eine erste Positioniereinrichtung in Form eines Roboters mit sechs Schwenkachsen und eine zugehörige zweite Positioniereinrichtung mit zwei Schwenkachsen aufweist. An dem Roboter ist als Werkzeug ein Schweißbrenner angeordnet. Alternativ kann an dem Roboter auch ein zu schweißendes Werkstück angeordnet sein.

Aus der US 2006/048364 A1 ist eine Positioniereinrichtung in Form eines Roboters mit sechs Schwenkachsen bekannt. Der Roboter kann zur Positionierung von Werkzeugen und von zu bearbeitenden Werkstücken eingesetzt werden. Mittels eines Kraftsensors wird die vom Werkzeug auf das Werkstück ausgeübte Kraft erfasst und die Position des Werkzeugs relativ zu dem Werkstück geregelt.

Aus der EP 0 381 602 A1 ist eine Positioniereinrichtung mit einem Werkstück- oder Werkzeughalter bekannt. Die Positioniereinrichtung weist einen Sockel auf, an dem ein erster Schwenkarm angeordnet ist. An diesem ist wiederum ein zweiter Schwenkarm angeordnet.

Der Erfindung liegt daher die Aufgabe zugrunde, eine Bearbeitungsanlage für Werkstücke zu schaffen, die einfach aufgebaut ist und eine flexible sowie genaue Bearbeitung von Werkstücken ermöglicht.

Diese Aufgabe wird durch eine Bearbeitungsanlage mit den Merkmalen des Anspruchs 1 gelöst. Dadurch, dass die Werkstück-Positioniereinrichtung und die Werkzeug-Positioniereinrichtung jeweils eine Schwenkeinheit aufweisen, werden einerseits die für eine flexible Bearbeitung der Werkstücke erforderlichen Schwenkachsen bereitgestellt und andererseits die Schwenkachsen auf zwei Schwenkeinheiten aufgeteilt, so dass eine genaue Bearbeitung der Werkstücke gewährleistet ist. Durch die Aufteilung der Schwenkachsen und die damit verbundene Begrenzung der Anzahl der Schwenkteile der jeweiligen Schwenkeinheit können die Positioniereinrichtungen im Wesentlichen starr ausgebildet werden. Die von den Schwenkeinheiten gebildeten seriellen kinematischen Ketten sind aufgrund der Aufteilung der Schwenkachsen kurz, sodass sich Positionierfehler in der jeweiligen kinematischen Kette nur begrenzt fortpflanzen können. Weiterhin weist die Werkstück-Positioniereinrichtung durch die Werkstückhalter-Schwenkeinheit einen großen Bewegungsraum auf, sodass die zu bearbeitenden Werkstücke mittels der Werkstück-Positioniereinrichtung einfach aufgenommen und nach der Bearbeitung wieder abgelegt werden können.

Darüber hinaus ist die Bearbeitungsanlage in ihrem Aufbau einfach und dementsprechend in der Herstellung vergleichsweise kostengünstig. Die Werkstück-Positioniereinrichtung kann beispielsweise als Industrieroboter ausgebildet sein, der mit einer im Vergleich zu handelsüblichen Industrierobotern reduzierten Anzahl an Schwenkachsen ausgebildet ist. Die ungenaue serielle kinematische Kette eines handelsüblichen Industrieroboters wird aufgrund der reduzierten Anzahl an Schwenkachsen unterbrochen, wobei die Werkzeug-Positioniereinrichtung die weiteren Schwenkachsen bereitstellt. Durch die Aufteilung der Schwenkachsen und dementsprechend der kinematischen Kette kann der Industrieroboter für die Bearbeitung von Werkstücken eingesetzt werden, da der Industrieroboter eine ausreichende Stabilität und Starrheit aufweist, um eine hohe Bearbeitungsgenauigkeit sicherzustellen. Vorzugsweise sind die Positioniereinrichtungen auf einem gemeinsamen Untergestell angeordnet, so dass diese bereits werkseitig justiert und kalibriert werden können. Der als Arbeitsspindeleinheit ausgebildete Werkzeughalter mit einer um eine Spindelachse drehantreibbaren Arbeitsspindel ermöglicht das Drehantreiben von Werkzeugen. Die Arbeitsspindeleinheit ist beispielsweise an einem zweiten Werkzeughalter-Schwenkteil angeordnet.

Die Positionsmesseinheit zur Messung der Absolutposition des Werkstückhalters ermöglicht das Erkennen von Positionierfehlern des Werkstückhalters. Die Positionsmesseinheit ist beispielsweise optisch oder mechanisch ausgebildet. Die Positionsmesseinheit ist vorzugsweise derart ausgebildet, dass während der Bearbeitung eines Werkstücks ständig Messwerte der Absolutposition des Werkstückhalters bereitgestellt werden, sodass Positionierfehler aufgrund von auftretenden Bearbeitungskräften unmittelbar erkennbar sind. Durch die Positionsmesseinheit ist eine Steigerung der Bearbeitungsgenauigkeit möglich.

Eine Werkstückhalter-Schwenkeinheit nach Anspruch 2 ermöglicht eine Vielzahl von Bearbeitungspositionen der mittels des Werkstückhalters gehaltenen Werkstücke. Darüber hinaus ermöglicht die Werkstückhalter-Schwenkeinheit einen großen Bewegungsraum des Werkstückhalters, sodass die Werkstück-Positioniereinrichtung flexibel zum Beschicken der Bearbeitungsanlage mit Werkstücken nutzbar ist. Vorteilhafterweise ist die Werkstückhalter-Schwenkeinheit derart ausgebildet, dass das erste Werkstückhalter-Schwenkteil um die zugehörige erste Werkstückhalter-Schwenkachse um 360° verschwenkbar ist. Hierdurch wird eine hohe Flexibilität bei der Beschickung mit Werkstücken ermöglicht. Bei einer derartigen Ausbildung der Werkstückhalter-Schwenkeinheit sind Industrieroboter als Werkstück-Positioniereinrichtung verwendbar. Die Industrieroboter sind lediglich auf die Höchstanzahl von Werkstückhalter-Schwenkachsen zu reduzieren.

Eine Werkstückhalter-Schwenkeinheit nach Anspruch 3 ist einfach und starr ausgebildet.

Eine Ausbildung nach Anspruch 4 stellt eine hohe Bearbeitungsgenauigkeit sicher.

Eine Werkstückhalter-Schwenkeinheit nach Anspruch 5 ermöglicht eine hohe Flexibilität beim Positionieren der zu bearbeitenden Werkstücke, wobei eine ausreichende Stabilität und Starrheit der Werkstückhalter-Schwenkeinheit gewährleistet ist.

Eine Weiterbildung nach Anspruch 6 stellt eine vierte Werkstückhalter-Schwenkachse bereit, die die Stabilität und Starrheit der Werkstückhalter-Schwenkeinheit im Wesentlichen nicht beeinträchtigt. Der Werkstückhalter ist insbesondere um 360° um die vierte Werkstückhalter-Schwenkachse verschwenkbar, sodass eine maximale Flexibilität beim Positionieren der zu bearbeitenden Werkstücke erzielbar ist. Die Ausbildung der Werkstück-Positioniereinrichtung entspricht einem Industrieroboter, der auf vier Schwenkachsen reduziert ist.

Eine Werkzeughalter-Schwenkeinheit nach Anspruch 7 ermöglicht eine hohe Flexibilität beim Positionieren des Werkzeughalters. Darüber hinaus weist die Werkzeughalter-Schwenkeinheit eine hohe Stabilität und Starrheit auf. Vorzugsweise ist das zweite Werkzeughalter-Schwenkteil um 360° um die zugehörige zweite Werkzeughalter-Schwenkachse verschwenkbar. Die zweite Werkzeughalter-Schwenkachse verläuft relativ zu dem ersten Werkzeughalter-Schwenkteil im Wesentlichen vertikal und ist mit diesem um die horizontal verlaufende erste Werkzeughalter-Schwenkachse verschwenkbar. Die Werkzeug-Positioniereinrichtung kann beispielsweise als Dreh-/Schwenk-Tisch ausgebildet sein. Der Dreh-/Schwenk-Tisch kann einseitig oder zweiseitig gelagert ausgebildet sein.

Eine Werkzeughalter-Schwenkeinheit nach Anspruch 8 ist einfach aufgebaut und ermöglicht eine hohe Flexibilität beim Positionieren des Werkzeughalters. Darüber hinaus weist die Werkzeughalter-Schwenkeinheit eine hohe Stabilität und Starrheit auf. Vorzugsweise ist das Werkzeughalter-Schwenkteil um 360° um die zugehörige erste Werkzeughalter-Schwenkachse verschwenkbar. Weiterhin ist der Werkzeughalter vorzugsweise um mindestens 90° um die zweite Werkzeughalter-Schwenkachse verschwenkbar, so dass ein automatischer Werkzeugwechsel erfolgen kann. Der Werkzeughalter ist vorzugsweise beidseitig in dem gabelförmigen Werkzeughalter-Schwenkteil gelagert. Alternativ kann der Werkzeughalter lediglich einseitig an einem entsprechend ausgebildeten Vorsprung des Werkzeughalter-Schwenkteils gelagert sein.

Eine Werkzeughalter-Schwenkeinheit nach Anspruch 9 ermöglicht eine äußerst flexible Bearbeitung von Werkstücken.

Eine Ausbildung der Positionsmesseinheit nach Anspruch 10 ist einfach, robust, hochdynamisch und genau. Eine kraftflussfreie mechanische Messkinematik ermöglicht eine Messung der Absolutposition mit einer Genauigkeit von weniger als 20 µm. Bei einer Ausbildung der Messkinematik als λ-Kinematik ist eine Messung der Absolutposition mit einer Genauigkeit von ungefähr 5 µm möglich. Eine kraftflussfreie mechanische Messkinematik ist beispielsweise mittels Stäben konstanter Länge, Teleskopstäben sowie in Form einer Kniehebelkinematik oder einer λ-Kinematik realisierbar. Weiterhin kann die mechanische Messkinematik als Gelenkarm mit in den Drehgelenken befindlichen Drehmessgebern ausgebildet sein. Durch die lösbare Anordnung der mechanischen Messkinematik an der Werkstück-Positioniereinrichtung wird verhindert, dass der Bewegungsraum der Werkstück-Positioniereinrichtung eingeschränkt wird. Die Werkstück-Positioniereinrichtung ist trotz der mechanischen Messkinematik uneingeschränkt zum Beschicken der Bearbeitungsanlage einsetzbar. Vorzugsweise ist die mechanische Messkinematik an dem dritten Werkstückhalter-Schwenkteil nahe dem Werkstückhalter lösbar angeordnet.

Ein Traggestell nach Anspruch 11 ermöglicht eine einfache Befestigung der mechanischen Messkinematik. Dadurch, dass die Positioniereinrichtungen und das Traggestell mit der mechanischen Messkinematik an dem gemeinsamen Untergestell angeordnet sind, wird darüber hinaus eine hohe Messgenauigkeit erzielt.

Eine Weiterbildung nach Anspruch 12 ermöglicht eine flexible Bearbeitung von Werkstücken. Durch das Werkzeugmagazin können eine Vielzahl von Werkzeugen bereitgestellt werden. Der Werkzeugwechsel wird mittels des Werkzeugwechslers durchgeführt. Vorzugsweise ist das Werkzeugmagazin an der dem Arbeitsraum abgewandten Seite der Werkzeug-Positioniereinrichtung angeordnet, wobei sich der Werkzeugwechsler zwischen dem Werkzeugmagazin und der Werkzeug-Positioniereinrichtung unterhalb H- oder U-förmigen Traggestells für die mechanische Messkinematik befindet.

Eine Arbeitsspindel nach Anspruch 13 ermöglicht eine Korrektur von Positionierfehlern durch Verlagern der Spindelachse relativ zu dem Spindelgehäuse. Die Ausgestaltung der Arbeitsspindeleinheit kann prinzipiell beliebig sein, soweit die Arbeitsspindel in einem ausreichenden Maß sowie mit einer ausreichenden Geschwindigkeit relativ zu dem Spindelgehäuse verlagerbar ist um Positionierfehler zu korrigieren. Das Verlagern der Spindelachse kann beispielsweise derart erfolgen, dass die Arbeitsspindel mittels mindestens eines Magnetlagers in dem Spindelgehäuse gelagert ist, wobei bei entsprechender Ansteuerung des Magnetlagers die Spindelachse verschwenkbar ist. Alternativ kann die Arbeitsspindel in dem Spindelgehäuse derart gelagert sein, dass die Spindelachse radial zu einer Gehäuselängsachse verlagerbar ist.

Eine Recheneinheit nach Anspruch 14 ermöglicht eine einfache und genaue Kompensation von Positionierfehlern, so dass eine hochgenaue Bearbeitung von Werkstücken möglich ist.

Eine Recheneinheit nach Anspruch 15 ermöglicht eine Steigerung der Bearbeitungsgenauigkeit, da Positionierfehler, beispielsweise aufgrund von Bearbeitungskräften, mittels der Recheneinheit vorhersehbar und dementsprechend frühzeitig kompensierbar sind.

Weitere Merkmale, Vorteile und Einzelheiten der Erfindung ergeben sich aus der nachfolgenden Beschreibung mehrerer Ausführungsbeispiele anhand der Zeichnung. Es zeigen:
- Fig. 1: eine Seitenansicht einer Bearbeitungsanlage gemäß einem ersten Ausführungsbeispiel in einem Bearbeitungszustand,
- Fig. 2: eine Draufsicht auf die Bearbeitungsanlage in Fig. 1,
- Fig. 3: eine Seitenansicht der Bearbeitungsanlage in Fig. 1 in einem Beschickungszustand,
- Fig. 4: einen schematischen Längsschnitt durch eine Arbeitsspindeleinheit der Bearbeitungsanlage in Fig. 1,
- Fig. 5: eine Seitenansicht einer Bearbeitungsanlage gemäß einem zweiten Ausführungsbeispiel in einem Bearbeitungszustand,
- Fig. 6: eine perspektivische Ansicht einer Bearbeitungsanlage gemäß einem dritten Ausführungsbeispiel in einem Bearbeitungszustand,
- Fig. 7: eine Seitenansicht der Bearbeitungsanlage in Figur 6,
- Fig. 8: eine perspektivische Ansicht der Bearbeitungsanlage in Figur 6 in einem Beschickungszustand,
- Fig. 9: eine perspektivische Ansicht einer Bearbeitungsanlage gemäß einem vierten Ausführungsbeispiel in einem Bearbeitungszustand,
- Fig. 10: eine weitere perspektivische Ansicht der Bearbeitungsanlage in Figur 9, und
- Fig. 11: eine perspektivische Ansicht einer Bearbeitungsanlage gemäß einem fünften Ausführungsbeispiel in einem Übergabezustand.

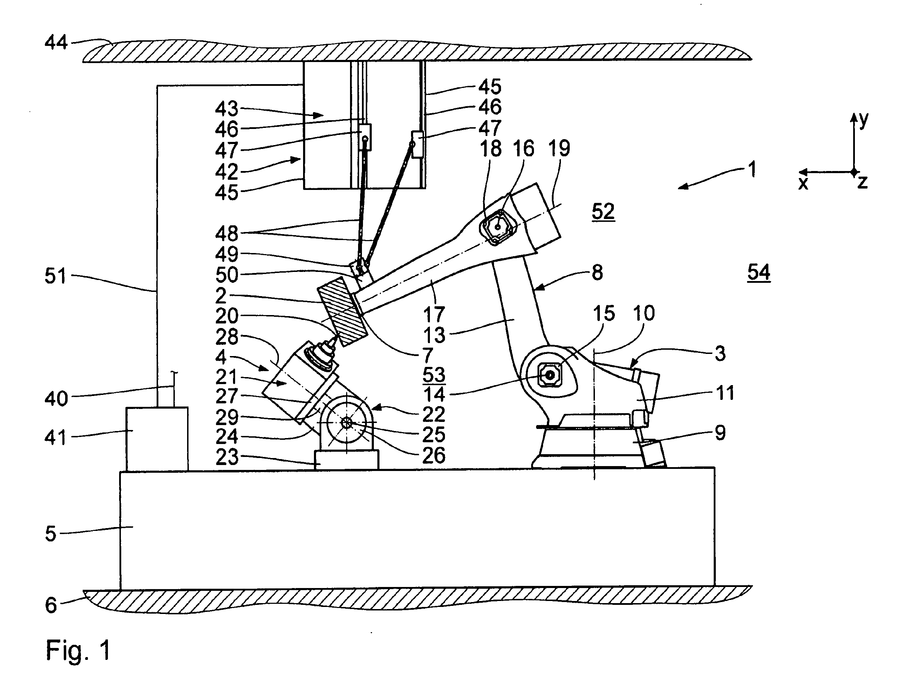

Nachfolgend wird unter Bezugnahme auf die Fig. 1 bis 4 ein erstes Ausführungsbeispiel der Erfindung beschrieben. Eine Bearbeitungsanlage 1 weist zur Bearbeitung von Werkstücken 2 eine Werkstück-Positioniereinrichtung 3 und eine Werkzeug-Positioniereinrichtung 4 auf. Die Positioniereinrichtungen 3, 4 sind auf einem gemeinsamen Untergestell 5 beabstandet voneinander befestigt. Das Untergestell 5 ist auf einer Fundamentplatte 6 befestigt. Alternativ können die Positioniereinrichtungen 3, 4 direkt auf der Fundamentplatte 6 befestigt sein.

Die Werkstück-Positioniereinrichtung 3 dient zum Positionieren der zu bearbeitenden Werkstücke 2 und ist nach Art eines Industrieroboters ausgebildet. Sie umfasst einen Werkstückhalter 7 zum Aufnehmen und Halten der Werkstücke 2, der über eine Werkstückhalter-Schwenkeinheit 8 verschwenkbar an einem Grundgestell 9 angeordnet ist. Das Grundgestell 9 ist auf dem Untergestell 5 befestigt. Die Werkstückhalter-Schwenkeinheit 8 weist zum Verschwenken des Werkstückhalters 7 um eine senkrecht verlaufende erste Werkstückhalter-Schwenkachse 10 ein als Karussell ausgebildetes erstes Werkstückhalter-Schwenkteil 11 auf, das mittels eines ersten Werkstückhalter-Schwenkantriebs 12 verschwenkbar an dem Grundgestell 9 angeordnet ist. Das erste Werkstückhalter-Schwenkteil 11 ist um 360° um die erste Werkstückhalter-Schwenkachse 10 verschwenkbar.

Weiterhin ist zum Verschwenken des Werkstückhalters 7 ein als Roboterarm ausgebildetes zweites Werkstückhalter-Schwenkteil 13 vorgesehen, das endseitig und um eine zweite horizontal verlaufende Werkstückhalter-Schwenkachse 14 verschwenkbar an dem ersten Werkstückhalter-Schwenkteil 11 angeordnet ist. Das Verschwenken des zweiten Werkstückhalter-Schwenkteils 13 erfolgt mittels eines zweiten Werkstückhalter-Schwenkantriebs 15.

Weiterhin ist zum Verschwenken des Werkstückhalters 7 um eine horizontal verlaufende dritte Werkstückhalter-Schwenkachse 16 ein als Roboterarm ausgebildetes drittes Werkstückhalter-Schwenkteil 17 vorgesehen. Die Werkzeughalter-Schwenkteile 13 und 17 sind mit ihren jeweiligen freien Enden aneinander angeordnet. An einem dem zweiten Werkzeughalter-Schwenkteil 13 abgewandten freien Ende des dritten Werkstückhalter-Schwenkteils 17 ist der Werkstückhalter 7 starr befestigt. Das Verschwenken des dritten Werkstückhalter-Schwenkteils 17 erfolgt mittels eines dritten Werkstückhalter-Schwenkantriebs 18.

Das dritte Werkstückhalter-Schwenkteil 17 weist eine Mittellängsachse 19 auf, um die der Werkstückhalter 7 aufgrund der starren Befestigung mit dem dritten Werkstückhalter-Schwenkteil 17 nicht verschwenkbar ist. Die Werkstückhalter-Schwenkeinheit 8 weist somit genau drei Werkstückhalter-Schwenkachsen 10, 14 und 16 auf, die durch die genau drei Werkstückhalter-Schwenkteile 11, 13 und 17 bereitgestellt werden.

Die Werkzeug-Positioniereinrichtung 4 dient zum Positionieren von zur Bearbeitung der Werkstücke 2 vorgesehenen Werkzeugen 20 und ist als Dreh-/Schwenk-Tisch ausgebildet. Die Werkzeug-Positioniereinrichtung 4 weist einen Werkzeughalter 21 zum Aufnehmen und Halten der Werkzeuge 20 auf, der mittels einer Werkzeughalter-Schwenkeinheit 22 verschwenkbar an einem weiteren Grundgestell 23 angeordnet ist. Das Grundgestell 23 ist auf dem Untergestell 5 befestigt.

Die Werkzeughalter-Schwenkeinheit 22 weist ein als Schwenktisch ausgebildetes erstes Werkzeughalter-Schwenkteil 24 auf, das um eine erste horizontal verlaufende Werkzeughalter-Schwenkachse 25 verschwenkbar an dem Grundgestell 23 angeordnet ist. Das erste Werkzeughalter-Schwenkteil 24 ist zweiseitig an dem Grundgestell 23 gelagert. Alternativ kann das erste Werkzeughalter-Schwenkteil 24 einseitig an dem Grundgestell 23 gelagert sein. Zum Verschwenken des ersten Werkzeughalter-Schwenkteils 24 ist ein erster Werkzeughalter-Schwenkantrieb 26 vorgesehen. An dem ersten Werkzeughalter-Schwenkteil 24 ist ein zweites Werkzeughalter-Schwenkteil 27 um eine zweite vertikal verlaufende Werkzeughalter-Schwenkachse 28 verschwenkbar angeordnet. Das zweite Werkzeughalter-Schwenkteil 27 ist mittels eines zweiten Werkzeughalter-Schwenkantriebs 29 um 360° um die zweite Werkzeughalter-Schwenkachse 28 verschwenkbar. Das zweite Werkzeughalter-Schwenkteil 27 ist insbesondere als Drehteller ausgebildet, der mittig auf dem Schwenktisch angeordnet ist. Der Werkzeughalter 21 ist starr an dem zweiten Werkzeughalter-Schwenkteil 27 befestigt. Die Werkzeughalter-Schwenkeinheit 22 weist somit genau zwei Werkzeughalter-Schwenkachsen 25, 28 auf, die durch die genau zwei Werkzeughalter-Schwenkteile 24, 27 bereitgestellt werden.

Die Bearbeitungsanlage 1 weist somit insgesamt fünf Schwenkachsen 10, 14, 16, 25, 28 für das Bearbeiten von Werkstücken 2 auf.

Der Werkzeughalter 21 ist zum Drehantreiben der Werkzeuge 20 als Arbeitsspindeleinheit ausgebildet. Der Werkzeughalter wird nachfolgend als Arbeitsspindeleinheit 21 bezeichnet.

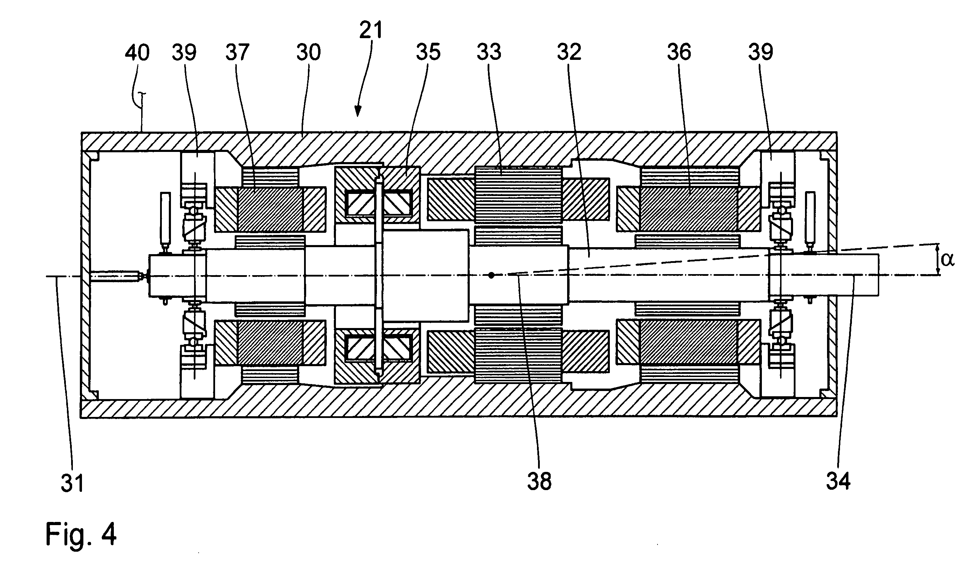

Die Arbeitsspindeleinheit 21 weist ein Spindelgehäuse 30 mit einer mittig verlaufenden Gehäuselängsachse 31 auf. In dem Spindelgehäuse 30 ist eine Arbeitsspindel 32 gelagert, die mittels eines Spindelantriebs 33 um eine Spindelachse 34 drehantreibbar ist. In Fig. 4 fällt die Spindelachse 34 mit der Gehäuselängsachse 31 zusammen. Zur Lagerung der Arbeitsspindel 32 ist ein Axiallager 35 sowie ein erstes Radiallager 36 und ein zweites Radiallager 37 vorgesehen. Das Axiallager 35 ist zwischen den Radiallagern 36 und 37 angeordnet.

Die Arbeitsspindeleinheit 21 ist derart ausgebildet, dass die Spindelachse 34 relativ zu dem Spindelgehäuse 30 verlagerbar ist. Hierzu sind beispielsweise die Radiallager 36, 37 als elektrisch betätigbare Magnetlager ausgebildet, so dass die Spindelachse 34 um einen mittig zwischen den Radiallagern 36, 37 liegenden Achsschwenkpunkt 38 verschwenkbar ist. Die Spindelachse 34 ist somit relativ zu der Gehäuselängsachse 31 um einen Achsschwenkwinkel α verlagerbar. Der Achsschwenkwinkel α ist in Fig. 4 schematisch dargestellt.

Zur Messung der Position und Ausrichtung der Spindelachse 34 sind mehrere Messelemente 39 vorgesehen, die an den freien Enden der Arbeitsspindel 32 zwischen dieser und dem Spindelgehäuse 30 angeordnet sind. Die Radiallager 36, 37 sind zwischen den Messelementen 39 angeordnet. Die Messelemente 39 sind über eine Signalleitung 40 mit einer Recheneinheit 41 verbunden.

Zur Messung einer Absolutposition des Werkstückhalters 7 in einer x-, y-und z-Richtung ist eine Positionsmesseinheit 42 vorgesehen. Die Positionsmesseinheit 42 weist einen rechteckigen Grundrahmen 43 auf, der ungefähr oberhalb der Werkzeug-Positioniereinrichtung 4 an einer Deckenplatte 44 befestigt ist. Der Grundrahmen 43 ist zu den Positioniereinrichtungen 3, 4 hin offen und wird durch vier Seitenwände 45 gebildet. An der der Werkstück-Positioniereinrichtung 3 zugewandten Seitenwand 45 sowie an den zu dieser benachbarten Seitenwänden 45 ist jeweils eine vertikal verlaufende Führungsschiene 46 angeordnet. Auf jeder der Führungsschienen 46 ist ein Messschlitten 47 verlagerbar angeordnet. An jedem der Messschlitten 47 ist mit einem ersten freien Ende ein Stab 48 drehbar angelenkt. Mit einem jeweiligen zweiten freien Ende sind die Stäbe 48 drehbar an einem ersten Verbindungsteil 49 angelenkt. Das erste Verbindungsteil 49 ist lösbar an einem zweiten Verbindungsteil 50 angeordnet. Das zweite Verbindungsteil 50 ist an dem dritten Werkstückhalter-Schwenkteil 17 nahe dem Werkstückhalter 7 befestigt. Die Führungsschienen 46, die Messschlitten 47, die Stäbe 48 und die Verbindungsteile 49, 50 bilden eine kraftflussfreie mechanische Messkinematik aus, die eine Messung der Absolutposition des Werkstückhalters 7 ermöglichen. Die Positionsmesseinheit 42 ist über eine Signalleitung 51 mit der Recheneinheit 41 verbunden.

Die Recheneinheit 41 ist über die Signalleitungen 40, 51 mit der Arbeitsspindeleinheit 21 und der Positionsmesseinheit 42 gekoppelt. Die Recheneinheit 41 ist derart ausgebildet, dass Positionierfehler des Werkstückhalters 7 relativ zu der Arbeitsspindeleinheit 21, insbesondere zu dem darin aufgenommenen Werkzeug 20, kompensierbar sind. Zusätzlich kann in der Recheneinheit 41 ein Rechenmodell der Werkstück-Positioniereinrichtung 3 und/oder der Werkzeug-Positioniereinrichtung 4 implementiert sein, wobei mittels des Rechenmodells Positionierfehler des Werkstückhalters 7 relativ zu der Arbeitsspindeleinheit 21, insbesondere zu dem darin aufgenommenen Werkzeug 20, erkennbar und kompensierbar sind.

Die Werkstück-Positioniereinrichtung 3 weist aufgrund der Werkstückhalter-Schwenkeinheit 8 einen Bewegungsraum 52 auf, der für die Bearbeitung von Werkstücken 2 und für die Beschickung mit Werkstücken 2 nutzbar ist. Dementsprechend kann der Bewegungsraum 52 in einen Arbeitsraum 53, der zwischen den Positioniereinrichtungen 3, 4 angeordnet ist, und in einen Beschickungsraum 54, der im Wesentlichen gegenüberliegend zu dem Arbeitsraum 53 angeordnet ist, unterteilt werden.

Nachfolgend wird die Funktionsweise der Bearbeitungsanlage 1 beschrieben:
Vor der Bearbeitung von Werkstücken 2 wird die Bearbeitungsanlage 1 kalibriert. Hierzu gibt die Recheneinheit 41 den Positioniereinrichtungen 3, 4 verschiedenste Positionen vor, die diese dann anfahren. Anschließend werden die angefahrenen Positionen gemessen und mit den vorgegebenen Positionen verglichen. Bei Abweichungen zwischen den vorgegebenen und gemessenen Positionen werden die entsprechenden Ansteuerparameter in der Recheneinheit 41 korrigiert.

Darüber hinaus werden in der Recheneinheit 41 Korrekturfaktoren eingestellt, mittels derer in Abhängigkeit von der Umgebungstemperatur die Ansteuerparameter verändert werden und somit eine Temperaturkompensation durchgeführt wird.

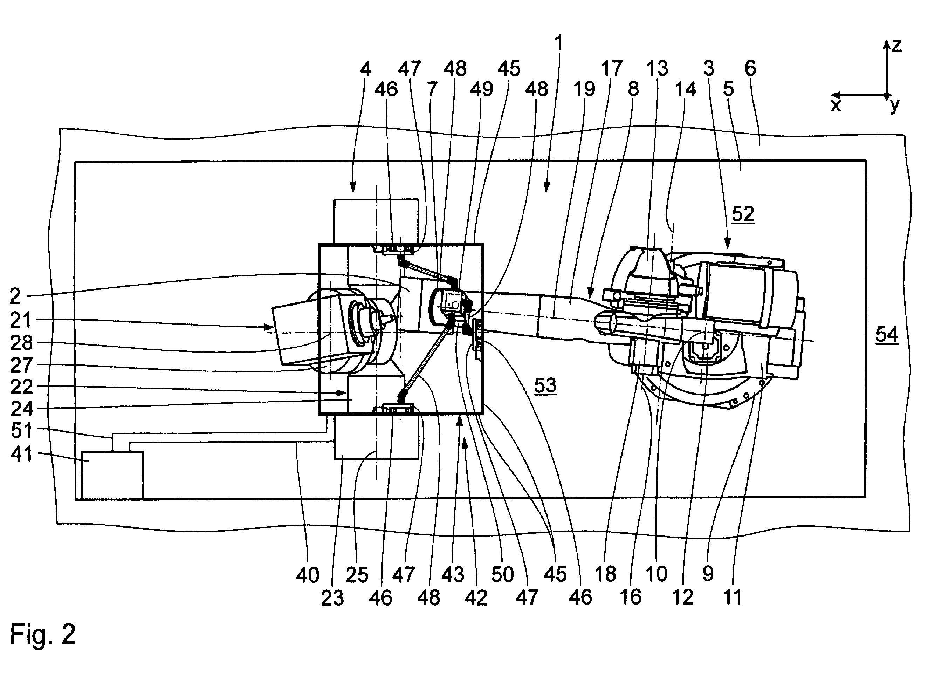

Die Fig. 1 und 2 zeigen die Bearbeitungsanlage 1 in einem Bearbeitungszustand. Das zu bearbeitende Werkstück 2 wird von dem Werkstückhalter 7 gehalten und mittels der Werkstückhalter-Schwenkeinheit 8 um die Werkstückhalter-Schwenkachsen 10, 14, 16 nach Bedarf verschwenkt. Das zur Bearbeitung des Werkstücks 2 vorgesehene Werkzeug 20 ist in der Arbeitsspindeleinheit 21 aufgenommen und wird mittels der Werkzeughalter-Schwenkeinheit 22 nach Bedarf um die Werkzeughalter-Schwenkachsen 25, 28 verschwenkt. Während der Bearbeitung des Werkstücks 2 stellt die Positionsmesseinheit 42 ständig Messwerte der Absolutposition des Werkstückhalters 7 in x-, y- und z-Richtung der Recheneinheit 41 bereit. Aufgrund von Bearbeitungskräften kann es zu Positionierfehlern des Werkstückhalters 7 kommen. Dementsprechend vergleicht die Recheneinheit 41 ständig die Messwerte für die Absolutposition des Werkstückhalters 7 mit den Sollwerten für die Absolutposition des Werkstückhalters 7, so dass Positionierfehler erkannt werden. Treten Positionierfehler auf, steuert die Recheneinheit 41 die elektromagnetisch betätigbaren Radiallager 36, 37 derart an, dass die Spindelachse 34 um den Achsschwenkpunkt 38 verschwenkt und somit um einen bestimmten Achsschwenkwinkel α verlagert und ausgerichtet wird, so dass die Positionierfehler kompensiert werden. Hierdurch wird eine Positioniergenauigkeit des Werkstückes 2 von mindestens 20 µm und eine Orientierungsgenauigkeit von mindestens 0,5' erzielt.

Sofern in die Recheneinheit 41 ein Rechenmodell implementiert ist, können bereits vor der eigentlichen Bearbeitung die zu erwartenden Positionierfehler ermittelt und durch eine entsprechende Ansteuerung der Positioniereinrichtungen 3, 4 kompensiert werden. Die Positionier- und Orientierungsgenauigkeit wird hierdurch verbessert.

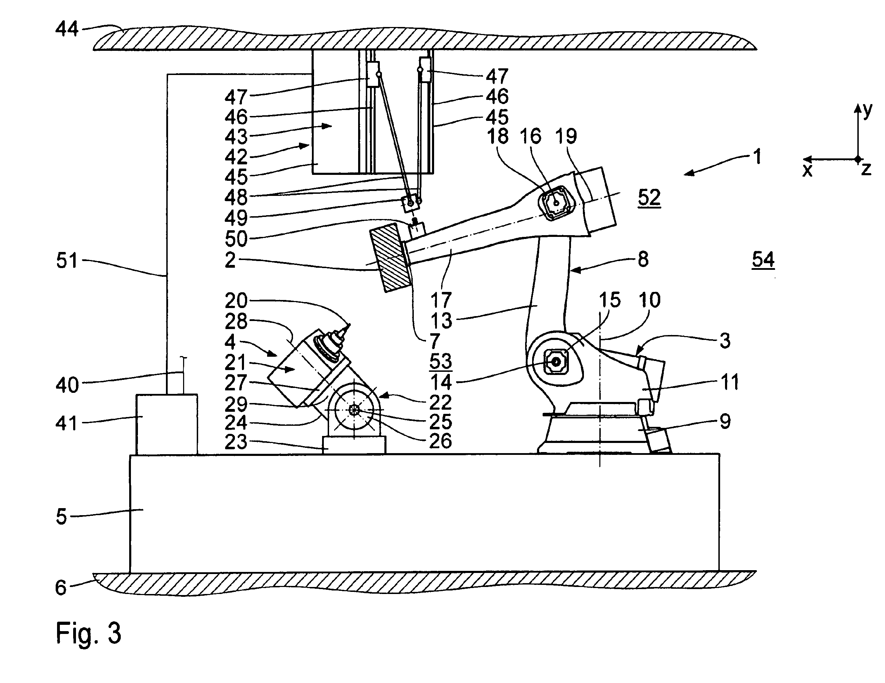

Die bei der Bearbeitung auftretenden Kräfte und Momente verursachen Schwingungen, die sich - ohne entsprechende Gegenmaßnahmen - negativ auf die Bearbeitungsgenauigkeit des Werkstückes 2 auswirken würden. Schwingungen im Frequenzbereich oberhalb von ca. 30 Hz treten aufgrund der Starrheit der Positioniereinrichtungen 3, 4 nicht auf. Insbesondere durch die Ausbildung der Werkstück-Positioniereinrichtung 3 mit nur drei Werkstückhalter-Schwenkachsen 10, 14, 16 wird eine hohe Starrheit erzielt. Schwingungen im Frequenzbereich von ca. 2 Hz bis 30 Hz werden von der Arbeitsspindeleinheit 21 über die elektromagnetisch betätigbaren Radiallager 36, 37 ausgeglichen. Schwingungen im Frequenzbereich von weniger als ca. 2 Hz werden durch Ausgleichsbewegungen der Werkstück-Positioniereinrichtung 3 und/oder der Werkzeug-Positioniereinrichtung 4 ausgeglichen. Die Bearbeitungsanlage 1 ermöglicht somit eine fünfachsige Bearbeitung des Werkstückes 2 mit einer hohen Bearbeitungsgenauigkeit. Nach der Bearbeitung des Werkstücks 2 wird die Positionsmesseinheit 42 von der Werkstück-Positioniereinrichtung 3 abgekoppelt. Hierzu wird das erste Verbindungsteil 49 von dem zweiten Verbindungsteil 50 gelöst. Dieser Beschickungszustand ist in Fig. 3 gezeigt. Die Werkstück-Positioniereinrichtung 3 kann nun das Werkstück 2 von dem Arbeitsraum 53 in den Beschickungsraum 54 verschwenken und dort, beispielsweise auf eine Palette oder ein Transportband, ablegen. Nachdem das fertig bearbeitete Werkstück 2 abgelegt wurde, nimmt die Werkstück-Positioniereinrichtung 3 ein neues Werkstück 2 auf und verschwenkt aus dem Beschickungsraum 54 wieder in den Arbeitsraum 53. Dort wird die Positionsmesseinheit 42 wieder angekoppelt, indem das erste Verbindungsteil 49 wieder mit dem zweiten Verbindungsteil 50 verbunden wird. Anschließend kann das neue Werkstück 2 bearbeitet werden. Aufgrund des großen Bewegungsraums 52 kann die Werkstück-Positioniereinrichtung 3 somit auch flexibel zum Beschicken eingesetzt werden.

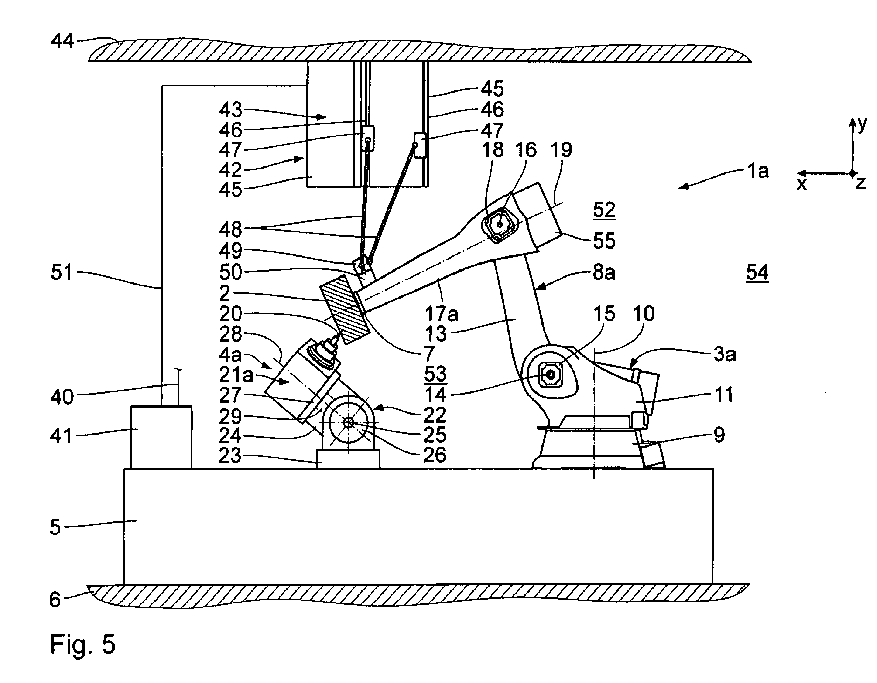

Nachfolgend wird unter Bezugnahme auf Fig. 5 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel ist, dass die Werkstückhalter-Schwenkeinheit 8a derart ausgebildet ist, dass der Werkstückhalter 7 um die Mittellängsachse 19 verschwenkbar ist. Die Mittellängsachse 19 bildet somit eine vierte Werkstückhalter-Schwenkachse. Die Mittellängsachse wird nachfolgend als vierte Werkstückhalter-Schwenkachse 19 bezeichnet. Zum Verschwenken des Werkstückhalters 7 um die vierte Werkstückhalter-Schwenkachse 19 ist ein vierter Werkstückhalter-Schwenkantrieb 55 vorgesehen, der gegenüberliegend zu dem Werkstückhalter 7 an dem dritten Werkstückhalter-Schwenkteil 17a angeordnet ist. Die Werkstückhalter-Schwenkeinheit 8a der Werkstück-Positioniereinrichtung 3a weist somit genau vier Werkstückhalter-Schwenkachsen 10, 14, 16 und 19 auf. Die Bearbeitungsanlage 1a weist dementsprechend insgesamt sechs Schwenkachsen 10, 14, 16, 19, 25, 28 für das Bearbeiten von Werkstücken 2 auf.

Weiterhin ist die Arbeitsspindeleinheit 21 a der Werkzeug-Positioniereinrichtung 4a derart ausgebildet, dass die Spindelachse 34 radial zu der Gehäuselängsachse 31 verlagerbar ist. Eine derartige Arbeitsspindeleinheit 21a ist beispielsweise in der US 5 971 678 A (entspr. DE 699 19 874 T2), der US 6 663 327 B2 und der US 7 189 038 B2 beschrieben. Die Spindelachse 34 ist somit im Wesentlichen parallel zu der Gehäuselängsachse 31 radial in alle Richtungen verlagerbar, wodurch Positionierfehler ausgleichbar sind.

Durch die vierte Werkstückhalter-Schwenkachse 19 kann das Positionieren des zu bearbeitenden Werkstücks 2 mit einer größeren Flexibilität erfolgen. Die mittels der Positionsmesseinheit 42 gemessenen Positionsfehler können durch die Arbeitsspindeleinheit 21 a ausgeglichen werden. Hierzu steuert die Recheneinheit 41 die Arbeitsspindeleinheit 21a derart an, dass die Arbeitsspindel 32 mit der zugehörigen Spindelachse 34 radial zu der Gehäuselängsachse 31 verlagert wird und somit die Positionierfehler ausgeglichen werden. Hinsichtlich der weiteren Funktionsweise wird auf die Beschreibung des ersten Ausführungsbeispiels verwiesen.

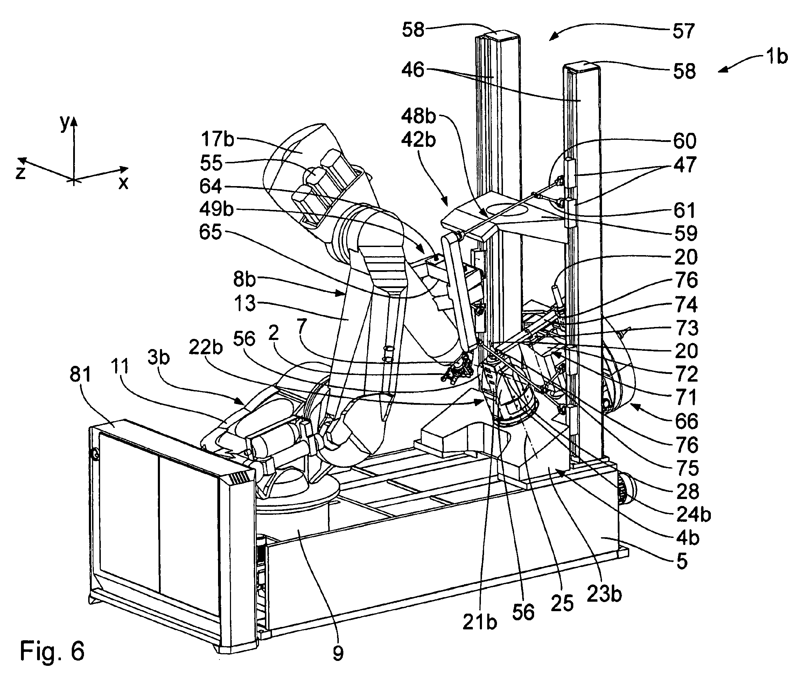

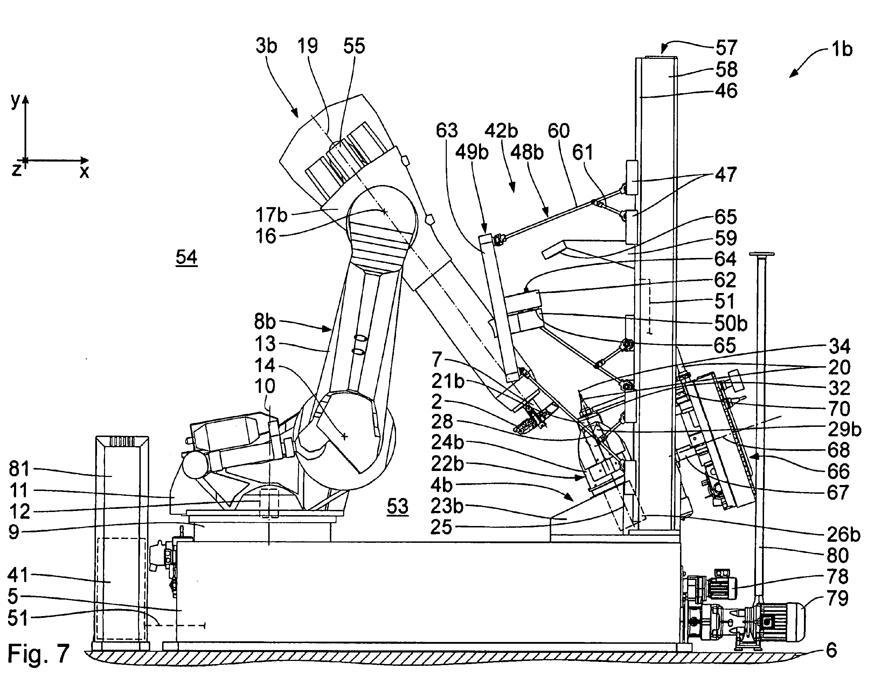

Nachfolgend wird unter Bezugnahme auf die Fig. 6 bis 8 ein drittes Ausführungsbeispiel der Erfindung beschrieben. Konstruktiv identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b. Die Werkstück-Positioniereinrichtung 3b ist entsprechend dem zweiten Ausführungsbeispiel ausgebildet und weist genau vier Werkstückhalter-Schwenkachsen 10, 14, 16 und 19 auf. Die Werkzeug-Positioniereinrichtung 4b weist entsprechend den vorangegangenen Ausführungsbeispielen genau zwei Werkzeughalter-Schwenkachsen 25, 28 zum Verschwenken der Arbeitsspindeleinheit 21 b relativ zu dem zweiten Grundgestell 23b auf. Die Werkzeughalter-Schwenkeinheit 22b weist ein Werkzeughalter-Schwenkteil 24b auf, das auf dem keilförmig ausgebildeten Grundgestell 23b um die erste Werkzeughalter-Schwenkachse 25 verschwenkbar angeordnet ist. Die erste Werkzeughalter-Schwenkachse 25 verläuft senkrecht zu der Befestigungsoberfläche des Grundgestells 23b und relativ zu der y-Richtung um den Neigungswinkel der Befestigungsoberfläche geneigt. Das Werkzeughalter-Schwenkteil 24b ist gabelförmig ausgebildet und weist zwei zueinander beabstandete Gabelabschnitte 56 auf. Zwischen den Gabelabschnitten 56 ist die Arbeitsspindeleinheit 21b um die zweite horizontal verlaufende Werkzeughalter-Schwenkachse 28 verschwenkbar gelagert. Zum Verschwenken der Arbeitsspindeleinheit 21b ist in den Gabelabschnitten 56 jeweils ein Werkzeughalter-Schwenkantrieb 29b integriert. Die Spindelachse 34 der Arbeitsspindel 32 ist im Gegensatz zu den vorangegangenen Ausführungsbeispielen relativ zu dem Spindelgehäuse 30 nicht verlagerbar.

Die Positionsmesseinheit 42b ist als mechanische λ-Kinematik ausgebildet. Zur Befestigung der Positionsmesseinheit 42b ist endseitig an dem Untergestell 5 ein Traggestell 57 angeordnet. Das Traggestell 57 ist H-förmig ausgebildet und weist zwei Vertikalträger 58 auf, die ungefähr mittig durch einen Horizontalträger 59 verbunden sind. Der Horizontalträger 59 springt in Richtung des Arbeitsraums 53 gegenüber den Vertikalträgern 58 vor. An jedem der Vertikalträger 58 ist eine Führungsschiene 46 angeordnet. Auf den Führungsschienen 46 sind die Messschlitten 47 der Stäbe 48b verlagerbar angeordnet. Die Stäbe 48b sind λ-förmig ausgebildet und weisen jeweils einen ersten langen Stababschnitt 60 und einen zweiten kurzen Stababschnitt 61 auf. Jeder der langen Stababschnitte 60 ist mit seinem ersten freien Ende an einem der Messschlitten 47 und mit seinem zweiten freien Ende an dem ersten Verbindungsteil 49b drehbar angelenkt. Jeder der kurzen Stababschnitte 61 ist mit seinem ersten freien Ende an einem weiteren Messschlitten 47 und mit seinem zweiten freien Ende an dem jeweils zugehörigen langen Stababschnitt 60 drehbar angelenkt. Das Verbindungsteil 49b ist im Wesentlichen T-förmig ausgebildet und weist einen horizontalen Verbindungsschenkel 62 und einen mittig daran befestigten vertikalen Verbindungsschenkel 63 auf. Zwei der drei Stäbe 48b sind endseitig an dem vertikalen Verbindungsschenkel 63 und der verbleibende dritte Stab 48b endseitig an dem horizontalen Verbindungsschenkel 62 angelenkt. Dementsprechend sind an dem, dem vertikalen Verbindungsschenkel 63 zugehörigen Vertikalträger 58 zwei der Stäbe 48b angelenkt, wohingegen der verbleibende dritte Stab 48b an dem, dem horizontalen Verbindungsschenkel 62 zugehörigen Vertikalträger 58 angelenkt ist. An der Ober- und der Unterseite des horizontalen Verbindungsschenkels 62 sind jeweils zwei Haltezapfen 64 angeordnet. Die Haltezapfen 64 können in zugehörige Halteaufnahmen 65 eingerastet werden, die an dem vorspringenden Horizontalträger 59 und dem an dem dritten Werkstückhalter-Schwenkteil 17 befestigten Verbindungsteil 50b angeordnet sind.

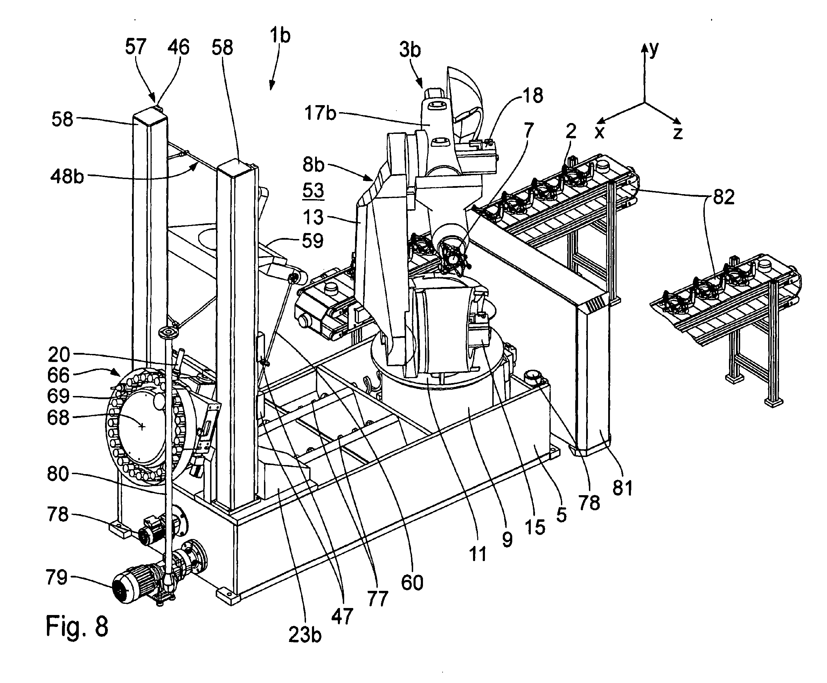

Zur Bereitstellung einer Vielzahl von Werkzeugen 20 ist ein Werkzeugmagazin 66 vorgesehen, das an einer dem Arbeitsraum 53 abgewandten Seite des Traggestells 57 an dem Untergestell 5 befestigt ist. Das Werkzeugmagazin 66 ist als Scheibenmagazin ausgebildet und mittels eines Magazinantriebs 67 um eine Magazinachse 68 drehbar. Die Magazinachse 68 verläuft im Wesentlichen parallel zu der Befestigungsoberfläche des Grundgestells 23b und im Wesentlichen parallel zu der x-y-Ebene. Das Werkzeugmagazin 66 weist umfangsseitig eine Vielzahl von Werkzeugaufnehmern 69 auf, die derart angeordnet sind, dass die Mittellängsachsen der Werkzeuge 20 im Wesentlichen parallel zu der Magazinachse 68 verlaufen. Die Werkzeugaufnehmer 69 sind mittels eines Aufnehmerantriebs 70 um ca. 90° verschwenkbar, so dass die Mittellängsachse des jeweils verschwenkten Werkzeuges 20 radial verläuft, wie dies in Fig. 8 gezeigt ist. Durch das Verschwenken gelangen die Werkzeuge 20 aus ihrer Speicherposition in eine Übergabeposition. Alternativ können die Werkzeugaufnehmer 69 bereits derart angeordnet sein, dass die Mittellängsachsen der Werkzeuge 20 radial verlaufen. Ein Aufnehmerantrieb 70 zum Verschwenken der Werkzeugaufnehmer 69 ist dann nicht erforderlich.

In dem Zwischenraum zwischen der Werkzeug-Positioniereinrichtung 4b und dem Werkzeugmagazin 66 sowie zwischen den Vertikalträgern 58 ist ein Werkzeugwechsler 71 angeordnet. Der Werkzeugwechsler 71 weist ein Wechslergrundgestell 72 auf, das auf der Befestigungsoberfläche des Grundgestells 23b entsprechend geneigt befestigt ist. In das Wechslergrundgestell 72 ist ein Wechslerantrieb 73 integriert, an dem ein Wechslerarm 74 befestigt ist. Der Wechslerarm 74 ist mittels des Wechslerantriebs 73 um eine Wechslerachse 75 verschwenkbar, die im Wesentlichen parallel zu der ersten Werkzeughalter-Schwenkachse 25 verläuft. Der Wechselarm 74 weist endseitig jeweils eine Werkzeugklammer 76 zum Halten von zwei Werkzeugen 20 auf.

In das Untergestell 5 sind mehrere Späneförderer 77 integriert, die mittels zugehöriger Förderantriebe 78 drehantreibbar sind. Weiterhin ist an dem Untergestell 5 eine Kühlmittelpumpe 79 befestigt, die über Förderleitungen 80 Kühlmittel zu der Arbeitsspindeleinheit 21 b pumpt. Die Recheneinheit 41 ist in einem Schaltschrank 81 angeordnet. Der Schaltschrank 81 ist neben dem Untergestell 5 auf der Fundamentplatte 6 befestigt. Alternativ kann der Schaltschrank 81 an oder auf dem Untergestell 5 befestigt sein.

Zum An- und Abtransportieren der Werkstücke 2 sind zwei Transporteinrichtungen 82 in Form von Transportbändern vorgesehen, die beidseitig neben dem Untergestell 5 angeordnet sind. Alternativ können beide Transportbänder 82 an einer Seite des Untergestells 5 angeordnet sein. Weiterhin kann nur ein Transportband 82 vorgesehen sein, das die Werkstücke 2 anals auch abtransportiert.

Die Bearbeitung der Werkstücke 2 erfolgt prinzipiell entsprechend den vorangegangenen Ausführungsbeispielen. Das zu bearbeitende Werkstück 2 sowie das Werkzeug 20 werden mittels der Werkstückhalter-Schwenkeinheit 8b sowie der Werkzeughalter-Schwenkeinheit 22b nach Bedarf um die insgesamt sechs Schwenkachsen 10, 14, 16, 19, 25 und 28 verschwenkt. Während der Bearbeitung stellt die Positionsmesseinheit 42b ständig Messwerte der Absolutposition des Werkstückhalters 7 in x-, y-und z-Richtung der Recheneinheit 41 bereit. Die Recheneinheit 41 vergleicht ständig die Messwerte mit den Sollwerten für die Absolutposition des Werkstückhalters 7, so dass Positionierfehler erkannt werden. Treten Positionierfehler auf, steuert die Recheneinheit 41 nach Bedarf die Schwenkantriebe 12, 15, 18, 26, 29 und/oder 55 an und positioniert den Werkstückhalter 7 und/oder die Arbeitsspindeleinheit 21 nach. Durch die λ-Messkinematik wird eine hohe Messgenauigkeit und dementsprechend eine hohe Bearbeitungsgenauigkeit erzielt. Sofern in die Recheneinheit 41 ein Rechenmodell implementiert ist, können bereits die zu erwartenden Positionierfehler ermittelt und durch entsprechende Ansteuerung der Positioniereinrichtungen 3b, 4b kompensiert werden.

Nach der Bearbeitung des Werkstücks 2 wird die Positionsmesseinheit 42b abgekoppelt. Hierzu wird das erste Verbindungsteil 49b mit den Haltezapfen 64 in die zugehörigen Halteaufnahmen 65 des Horizontalträgers 59 eingerastet und die Halteaufnahmen 65 des zweiten Verbindungsteils 50b gelöst. Dieser Beschickungszustand ist in Fig. 8 gezeigt. Die Werkstück-Positioniereinrichtung 3b kann nun das Werkstück 2 auf das für den Abtransport zuständige Transportband 82 ablegen und anschließend zu dem für den Antransport zuständige Transportband 82 verschwenken und dort ein neues zu bearbeitenden Werkstück 2 aufnehmen. Anschließend wird die Positionsmesseinheit 42b wieder angekoppelt, so dass eine Bearbeitung des neuen Werkstücks 2 erfolgen kann.

Zum Werkzeugwechsel wird die Werkzeug-Positioniereinrichtung 4b zunächst derart verschwenkt, dass die Spindelachse 34 im Wesentlichen parallel zu der Wechslerachse 75 verläuft. Befindet sich das gewünschte Werkzeug 20 in der um 90° verschwenkten Übergabeposition, wird der Wechslerarm 74 mittels des Wechslerantriebs 73 derart verschwenkt, dass die erste Werkzeugklammer 76 das abgenutzte Werkzeug 20 aus der Arbeitsspindel 32 und die zweite Werkzeugklammer 76 das neue Werkzeug 20 aus dem Werkzeugmagazin 66 entnimmt. Anschließend wird der Wechslerarm 74 in üblicher Weise in Richtung der Wechslerachse 75 angehoben, 180° um diese verschwenkt und wieder abgesenkt, so dass das verschlissene Werkzeug 20 in dem Werkzeugaufnehmer 69 und das neue Werkzeug 20 in der Arbeitsspindel 32 aufgenommen wird. Nach dem Lösen der Werkzeugklammern 76 wird der Wechslerarm 74 um 90° in seine Ausgangsposition verschwenkt, so dass die Bearbeitung des Werkstücks 2 in der bereits beschriebenen Weise fortgeführt werden kann. Hinsichtlich der weiteren Funktionsweise wird auf die vorangegangen Ausführungsbeispiele verwiesen.

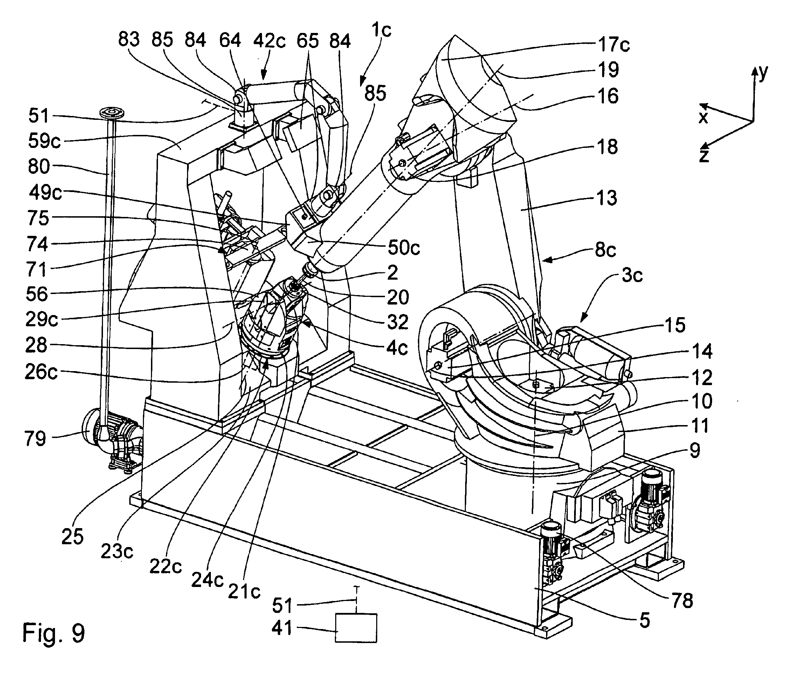

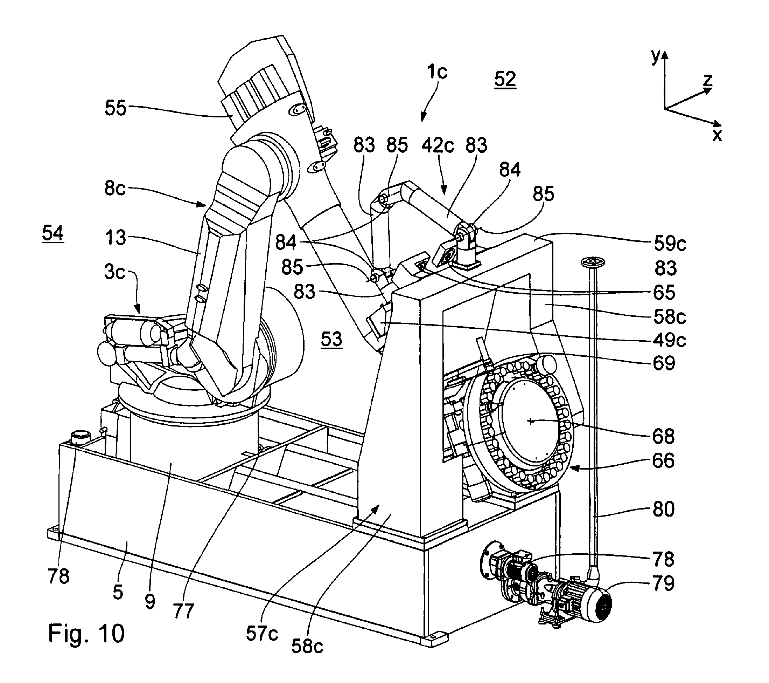

Nachfolgend wird unter Bezugnahme auf die Fig. 9 und 10 ein viertes Ausführungsbeispiel der Erfindung beschrieben. Konstruktiv identische Teile erhalten dieselben Bezugszeichen wie bei den vorangegangen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c. Die Positioniereinrichtungen 3c, 4c entsprechen dem dritten Ausführungsbeispiel und weisen dementsprechend vier Werkstückhalter-Schwenkachsen 10, 14, 16 und 55 und zwei Werkzeughalter-Schwenkachsen 25 und 28 auf. Das Werkzeugmagazin 66 und der Werkzeugwechsler 71 sind ebenfalls entsprechend dem dritten Ausführungsbeispiel ausgebildet.

Das Traggestell 57c ist - im Unterschied zu dem dritten Ausführungsbeispiel - U-förmig und einteilig mit dem zweiten Grundgestell 23b ausgebildet. Der Horizontalträger 59c ist endseitig an den Vertikalträgern 58c befestigt. Die Positionsmesseinheit 42c ist als mechanische Messkinematik in Form eines Gelenkarmes ausgebildet. Der Gelenkarm weist mehrere starre Armabschnitte 83 auf, die paarweise endseitig durch Drehgelenke 84 um jeweils eine horizontale Drehmessachse 85 miteinander verbunden sind. Ein erster endseitiger Armabschnitt 83 ist um eine vertikale Drehmessachse 85 drehbar an dem Horizontalträger 59c angeordnet. Ein zweiter endseitiger Armabschnitt 83 ist um eine weitere Drehmessachse 85 drehbar an dem ersten Verbindungsteil 49c angeordnet. Diese Drehmessachse 85 verläuft im angekoppelten Zustand der Positionsmesseinheit 42c im Wesentlichen parallel zu der vierten Werkstückhalter-Schwenkachse 19. Die Drehmessachsen 85 sind mit nicht näher dargestellten Drehmessgebem versehen, so dass die Absolutposition des Werkstückhalters 7 in x-, y- und z-Richtung messbar ist. Der Gelenkarm weist einen einfachen Aufbau und im Vergleich zu der λ-Kinematik eine höhere Beweglichkeit und Flexibilität auf. Hinsichtlich der weiteren Funktionsweise wird auf die vorangegangenen Ausführungsbeispiele verwiesen.

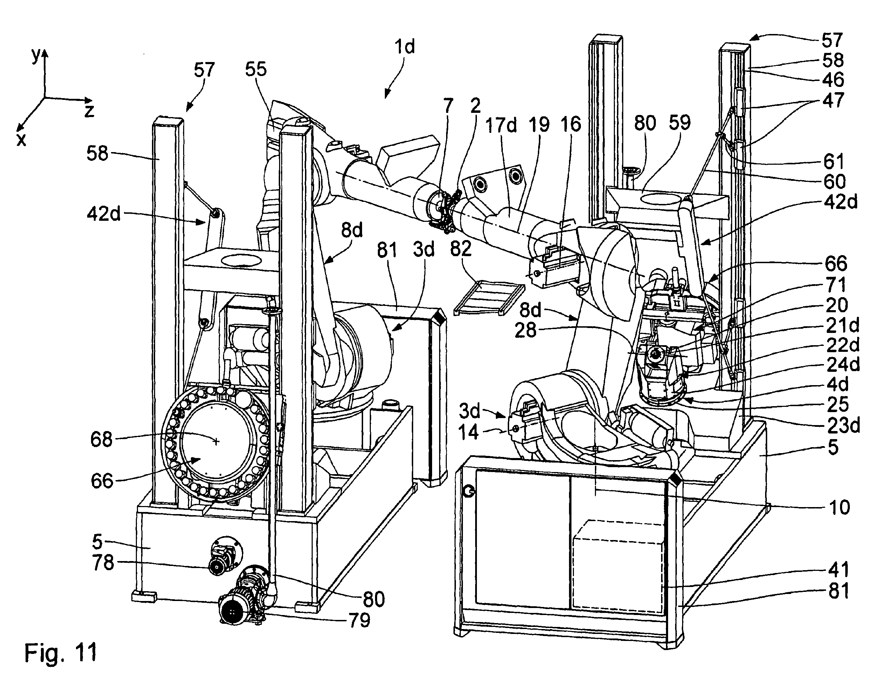

Nachfolgend wird unter Bezugnahme auf Fig. 11 ein fünftes Ausführungsbeispiel der Erfindung beschrieben. Konstruktiv identische Teile erhalten dieselben Bezugszeichen wie bei den vorangegangen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d. Die Bearbeitungsanlage 1d umfasst zwei Werkstück-Positioniereinrichtungen 3d sowie zwei zugehörige Werkzeug-Positioniereinrichtungen 4d. Jeweils eine Werkstück-Positioniereinrichtung 3d und eine zugehörige Werkzeug-Positioniereinrichtung 4d sind auf einem Untergestell 5 angeordnet und arbeiten mit einer zugehörigen Positionsmesseinheit 42d und einem zugehörigen Werkzeugmagazin 66 sowie einen Werkzeugwechsler 71 zusammen. Die Bearbeitungsanlage 1d bildet somit zwei nebeneinander angeordnete Bearbeitungsanlagen entsprechend dem dritten Ausführungsbeispiel aus. Die Werkstück-Positioniereinrichtungen 3d sind derart zueinander angeordnet, dass diese einander Werkstücke 2 übergeben können. Dies ist in Fig. 11 gezeigt. Hierdurch ist eine Grob- und Feinbearbeitung der Werkstücke 2 und/oder eine Bearbeitung der Werkstücke 2 an gegenüberliegenden Seiten möglich. Nach der ersten Bearbeitung des Werkstücks 2 wird dieses von der ersten Werkstück-Positioniereinrichtung 3d an die zweite Werkstück-Positioniereinrichtung 3d übergeben, die dann mit der Bearbeitung des Werkstücks 2 fortfährt. Das Transportband 82d zum Zu- und Abführen der Werkstücke 2 verläuft zwischen den Untergestellen 5. Nach der Übergabe eines Werkstückes 2 kann die unbestückte Werkstück-Positioniereinrichtung 3d unmittelbar ein neues Werkstück 2 aufnehmen. Entsprechend kann die zweite Werkstück-Positioniereinrichtung 3d nach dem Ablegen des fertig bearbeiteten Werkstücks 2 unmittelbar ein teilweise bearbeitetes Werkstück 2 von der ersten Werkstück-Positioniereinrichtung 3d übernehmen. Prinzipiell können auf diese Weise beliebig viele Bearbeitungsanlagen gemäß den vorangegangen Ausführungsbeispielen abwechselnd gegensätzlich orientiert nebeneinander angeordnet werden, so dass eine Vielzahl von Bearbeitungsstationen ausgebildet werden. Hinsichtlich der weiteren Funktionsweise wird auf die vorangegangenen Ausführungsbeispiele verwiesen.

Die Werkstück-Positioniereinrichtungen 3, 3a bis 3d können beliebig mit den Werkzeug-Positioniereinrichtungen 4, 4a bis 4d kombiniert werden. Darüber hinaus sind die Arbeitsspindeleinheiten 21, 21a bis 21d beliebig untereinander austauschbar. Insbesondere können die Arbeitsspindeleinheiten 21 und 21 a mit verlagerbarer Spindelachse 34 beliebig mit den Arbeitsspindeleinheiten 21 b bis 21 d mit nicht verlagerbarer Spindelachse 34 ausgetauscht werden. Weiterhin können die Werkstück-Positioniereinrichtungen 3, 3a bis 3d beliebig mit den Positionsmesseinheiten 42, 42b bis 42d kombiniert werden. Jede der Bearbeitungsanlagen 1, 1a bis 1d kann ein Werkzeugmagazin 66 mit einem zugehörigen Werkzeugwechsler 71 und/oder mindestens eine Transporteinrichtung 82 zum Zu- und/oder Abführen von Werkstücken 2 aufweisen. Das Werkzeugmagazin 66 sowie der Werkzeugwechsler 71 können prinzipiell beliebig ausgebildet sein. Bei entsprechender Ausbildung und Anordnung des Werkzeugmagazins 66 können den Arbeitsspindeleinheiten 21, 21 a bis 21 d die Werkzeuge 20 auch direkt zugeführt werden, so dass ein Werkzeugwechsler 71 nicht erforderlich ist. Die mindestens eine Transporteinrichtung 82 kann zum Zu-und Abführen von Werkstücken 2 beliebig ausgebildet und angeordnet sein.

## Patentansprüche

1. Bearbeitungsanlage für Werkstücke, umfassend
- eine Werkstück-Positioniereinrichtung (3; 3a bis 3d) zum Positionieren von zu bearbeitenden Werkstücken (2) mit
-- einem ersten Grundgestell (9),
-- einem Werkstückhalter (7) und
-- einer Werkstückhalter-Schwenkeinheit (8; 8a bis 8d), welche zwischen dem ersten Grundgestell (9) und dem Werkstückhalter (7) angeordnet ist, und
- eine Werkzeug-Positioniereinrichtung (4; 4a bis 4d) zum Positionieren von zur Bearbeitung der Werkstücke (2) vorgesehenen Werkzeugen (20) mit
-- einem zweiten Grundgestell (23; 23b bis 23d),
-- einem Werkzeughalter (21; 21a bis 21d) und
-- einer Werkzeughalter-Schwenkeinheit (22; 22b bis 22d),welche zwischen dem zweiten Grundgestell (23; 23b bis 23d) und dem Werkzeughalter (21; 21a bis 21d) angeordnet ist,
**dadurch gekennzeichnet,**
**dass** die Werkstückhalter-Schwenkeinheit (8; 8a bis 8d) derart ausgebildet ist, dass der Werkstückhalter (7) um mindestens drei und höchstens vier Werkstückhalter-Schwenkachsen (10, 14, 16; 10, 14, 16, 19) verschwenkbar ist,
**dass** der Werkzeughalter (21; 21a bis 21d) als Arbeitsspindeleinheit mit einer um eine Spindelachse (34) drehantreibbaren Arbeitsspindel (32) ausgebildet ist und die Werkzeughalter-Schwenkeinheit (22; 22b bis 22d) derart ausgebildet ist, dass die Arbeitsspindeleinheit (21; 21a bis 21d) um höchstens zwei Werkzeughalter-Schwenkachsen (25, 28) verschwenkbar ist, und
**dass** eine Positionsmesseinheit (42; 42b bis 42d) zur Messung einer Absolutposition des Werkstückhalters (7) vorgesehen ist.

2. Bearbeitungsanlage nach Anspruch 1, **dadurch gekennzeichnet, dass** die Werkstückhalter-Schwenkeinheit (8; 8a bis 8d) derart ausgebildet ist, dass
- ein erstes Werkstückhalter-Schwenkteil (11) um eine erste vertikal verlaufende Werkstückhalter-Schwenkachse (10) verschwenkbar an dem ersten Grundgestell (9) angeordnet ist,
- ein zweites Werkstückhalter-Schwenkteil (13) um eine zweite horizontal verlaufende Werkstückhalter-Schwenkachse (14) verschwenkbar an dem ersten Werkstückhalter-Schwenkteil (11) angeordnet ist,
- ein drittes Werkstückhalter-Schwenkteil (17; 17a bis 17d) um eine dritte horizontal verlaufende Werkstückhalter-Schwenkachse (16) verschwenkbar an dem zweiten Werkstückhalter-Schwenkteil (13) angeordnet ist, und
- der Werkstückhalter (7) an dem dritten Werkstückhalter-Schwenkteil (17; 17a bis 17d) angeordnet ist.

3. Bearbeitungsanlage nach Anspruch 1 oder 2, **dadurch gekennzeichnet, dass** die Werkstückhalter-Schwenkeinheit (8) genau drei Werkstückhalter-Schwenkachsen (10, 14, 16) aufweist.

4. Bearbeitungsanlage nach Anspruch 3 **dadurch gekennzeichnet, dass** der Werkstückhalter (7) starr an dem dritten Werkstückhalter-Schwenkteil (17) angeordnet ist.

5. Bearbeitungsanlage nach Anspruch 1 oder 2, **dadurch gekennzeichnet, dass** die Werkstückhalter-Schwenkeinheit (8a bis 8d) genau vier Werkstückhalter-Schwenkachsen (10, 14, 16, 19) aufweist.

6. Bearbeitungsanlage nach Anspruch 5, **dadurch gekennzeichnet, dass** der Werkstückhalter (7) um eine vierte Werkstückhalter-Schwenkachse (19) verschwenkbar an dem dritten Werkstückhalter-Schwenkteil (17a bis 17d) angeordnet ist, wobei die vierte Werkstückhalter-Schwenkachse (19) eine Mittellängsachse des dritten Werkstückhalter-Schwenkteils (17a bis 17d) ist.

7. Bearbeitungsanlage nach einem der Ansprüche 1 bis 6, **dadurch gekennzeichnet, dass** die Werkzeughalter-Schwenkeinheit (22) derart ausgebildet ist, dass
- ein erstes Werkzeughalter-Schwenkteil (24) um eine erste horizontal verlaufende Werkzeughalter-Schwenkachse (25) verschwenkbar an dem zweiten Grundgestell (23) angeordnet ist,
- ein zweites Werkzeughalter-Schwenkteil (27) um eine zweite vertikal verlaufende Werkzeughalter-Schwenkachse (28) verschwenkbar an dem ersten Werkzeughalter-Schwenkteil (24) angeordnet ist, und
- der Werkzeughalter (21; 21 a) an dem zweiten Werkzeughalter-Schwenkteil (27) angeordnet ist.

8. Bearbeitungsanlage nach einem der Ansprüche 1 bis 6, **dadurch gekennzeichnet, dass** die Werkzeughalter-Schwenkeinheit (22b bis 22d) derart ausgebildet ist, dass
- ein Werkzeughalter-Schwenkteil (24b bis 24d) um eine relativ zu dem zweiten Grundgestell (23b bis 23d) vertikal verlaufende Werkzeughalter-Schwenkachse (25) verschwenkbar an diesem angeordnet ist, und
- der Werkzeughalter (21b bis 21d) um eine zweite horizontal verlaufende Werkzeughalter-Schwenkachse (28) verschwenkbar an dem Werkzeughalter-Schwenkteil (24b bis 24d) angeordnet ist.

9. Bearbeitungsanlage nach einem der Ansprüche 1 bis 8, **dadurch gekennzeichnet, dass** die Werkzeughalter-Schwenkeinheit (22; 22b bis 22d) genau zwei Werkzeughalter-Schwenkachsen (25, 28) aufweist.

10. Bearbeitungsanlage nach einem der Ansprüche 1 bis 9, **dadurch gekennzeichnet, dass** die Positionsmesseinheit (42; 42b bis 42d) als mechanische Messkinematik ausgebildet ist und die mechanische Messkinematik insbesondere lösbar an der Werkstück-Positioniereinrichtung (3; 3a bis 3d) angeordnet ist.

11. Bearbeitungsanlage nach Anspruch 10 , **dadurch gekennzeichnet, dass** die mechanische Messkinematik an einem Traggestell (57; 57c) angeordnet ist, das zusammen mit der Werkstückhalter-Positioniereinrichtung (3b bis 3d) und der Werkzeughalter-Positioniereinrichtung (4b bis 4d) auf einem gemeinsamen Untergestell (5) befestigt ist.

12. Bearbeitungsanlage nach einem der Ansprüche 1 bis 11, **dadurch gekennzeichnet, dass** ein Werkzeugmagazin (66) und ein mit diesem und dem Werkzeughalter (21 b bis 21d) zusammenwirkender Werkzeugwechsler (71) vorgesehen sind, die zusammen mit der Werkstückhalter-Positioniereinrichtung (3b bis 3d) und der Werkzeughalter-Positioniereinrichtung (4b bis 4d) auf einem gemeinsamen Untergestell (5) angeordnet sind.

13. Bearbeitungsanlage nach einem der Ansprüche 1 bis 12, **dadurch gekennzeichnet, dass** die Spindelachse (34) der Arbeitsspindel (32) relativ zu dem Spindelgehäuse (30) verlagerbar ist.

14. Bearbeitungsanlage nach einem der Ansprüche 1 bis 13, **dadurch gekennzeichnet, dass** eine Recheneinheit (41) vorgesehen ist,
- welche mit der Positionsmesseinheit (42; 42b bis 42d) und der Arbeitsspindeleinheit gekoppelt ist, und
- welche derart ausgebildet ist, dass Positionierfehler des Werkstückhalters (7) kompensierbar sind.

15. Bearbeitungsanlage nach einem der Ansprüche 1 bis 14, **dadurch gekennzeichnet, dass** eine Recheneinheit (41) mit einem Rechenmodell der Werkstück-Positioniereinrichtung (3; 3a bis 3d) vorgesehen ist, wobei mittels des Rechenmodells Positionierfehler des Werkstückhalters (7) erkennbar und kompensierbar sind.

## Claims

1. Machining installation for workpieces, the machining installation comprising
- a workpiece positioning device (3; 3a to 3d) for positioning workpieces (2) to be machined, the workpiece positioning device (3; 3a to 3d) comprising
-- a first base frame (9);
-- a workpiece holder (7); and
-- a workpiece holder pivot unit (8; 8a to 8d)
--- which is arranged between the first base frame (9) and the workpiece holder (7); and
- a tool positioning device (4; 4a to 4d) for positioning tools (20) provided for machining the workpieces (2), the tool positioning device (4; 4a to 4d) comprising
-- a second base frame (23; 23b to 23d);
-- a tool holder (21; 21 a to 21 d); and
-- a tool holder pivot unit (22; 22b to 22d), which is arranged between the second base frame (23; 23b to 23d) and the tool holder (21; 2 1 a to 2 1 d),
**characterized**
**in that** workpiece holder pivot unit (8; 8a to 8d) is designed such that the workpiece holder (7) is pivotable about at least three and no more than four workpiece holder pivot axes (10, 14, 16; 10, 14, 16, 19),
**in that** the tool holder (21; 21 a to 21 d) is designed as a work spindle unit comprising a work spindle (32) which is drivable for rotation about a spindle axis (34), and the tool holder pivot unit (22; 22b to 22d) is designed such that the tool holder (21; 21 a to 21 d) is pivotable about no more than two tool holder pivot axes (25, 28); and
**in that** a position measuring unit (42; 42b to 42d) is provided for measuring an absolute position of the workpiece holder (7).

2. Machining installation according to claim 1, **characterized in that** the workpiece holder pivot unit (8; 8a to 8d) is designed such that
- a first workpiece holder pivot member (11) is arranged on the first base frame (9) for pivoting movement about a first vertical workpiece holder pivot axis (10);
- a second workpiece holder pivot member (13) is mounted to the first workpiece holder pivot member (11) for pivoting movement about a second horizontal workpiece holder pivot axis (14);
- a third workpiece holder pivot member (17; 17a to 17d) is mounted to the second workpiece holder pivot member (13) for pivoting movement about a third horizontal workpiece holder pivot axis (16); and
- the workpiece holder (7) is mounted to the third workpiece holder pivot member (17; 17a to 17d).

3. Machining installation according to claim 1 or 2, **characterized in that** the workpiece holder pivot unit (8) comprises exactly three workpiece holder pivot axes (10, 14, 16).

4. Machining installation according to claim 3, **characterized in that** the workpiece holder (7) is rigidly mounted to the third workpiece holder pivot member (17).

5. Machining installation according to claim 1 or 2, **characterized in that** the workpiece holder pivot unit (8a to 8d) comprises exactly four workpiece holder pivot axes (10, 14, 16, 19).

6. Machining installation according to claim 5, **characterized in that** the workpiece holder (7) is mounted to the third workpiece holder pivot member (17a to 17d) for pivoting movement about a fourth workpiece holder pivot axis (19), with the fourth workpiece holder pivot axis (19) being a central longitudinal axis of the third workpiece holder pivot member (17a to 17d).

7. Machining installation according to one of claims 1 to 6, **characterized**
**in that** the tool holder pivot unit (22) is designed such that
- a first tool holder pivot member (24) is arranged on the second base frame (23) for pivoting movement about a first horizontal tool holder pivot axis (25);
- a second tool holder pivot member (27) is mounted to the first tool holder pivot member (24) for pivoting movement about a second vertical tool holder pivot axis (28); and
- the tool holder (21; 21a) is mounted to the second tool holder pivot member (27).

8. Machining installation according to one of claims 1 to 6, **characterized**
**in that** the tool holder pivot unit (22b to 22d) is designed such that
- a tool holder pivot member (24b to 24d) is arranged on the second base frame (23b to 23d) for pivoting movement about a tool holder pivot axis (25) extending vertically relative to the second base frame (23b to 23d); and
- the tool holder (21 b to 21 d) is mounted to the tool holder pivot member (24b to 24d) for pivoting movement about a second horizontal tool holder pivot axis (28).

9. Machining installation according to one of claims 1 to 8, **characterized**
**in that** the tool holder pivot unit (22; 22b to 22d) comprises exactly two tool holder pivot axes (25, 28).

10. Machining installation according to one of claims 1 to 9, **characterized**
**in that** the position measuring unit (42; 42b to 42d) is designed as mechanical measuring kinematics and the mechanical measuring kinematics is in particular detachably mounted to the workpiece positioning device (3; 3a to 3d).

11. Machining installation according to claim 10, **characterized**
**in that** the mechanical measuring kinematics is arranged on a support frame (57; 57c) which is mounted on a common sub-frame (5) together with the workpiece holder positioning device (3b to 3d) and the tool holder positioning device (4b to 4d).

12. Machining installation according to one of claims 1 to 11, **characterized**
**in that** a tool magazine (66) and a tool changer (71) interacting with said tool magazine (66) and the tool holder (21b to 21d) are provided which are arranged on a common sub-frame (5) together with the workpiece holder positioning device (3b to 3d) and the tool holder positioning device (4b to 4d).

13. Machining installation according to one of claims 1 to 12, **characterized**
**in that** the spindle axis (34) of the work spindle (32) is displaceable relative to the spindle housing (30).

14. Machining installation according to one of claims 1 to 13, **characterized**
**in that** a computing unit (41) is provided
- which is coupled with the position measuring unit (42; 42b to 42d) and the work spindle unit; and
- which is designed such that positioning errors of the workpiece holder (7) are compensable.

15. Machining installation according to one of claims 1 to 14, **characterized**
**in that** a computing unit (41) comprising a computed model of the workpiece positioning device (3; 3a to 3d) is provided, with positioning errors of the workpiece holder (7) being detectable and compensable by means of the computed model.

## Revendications

1. Installation d'usinage de pièces comprenant
- un dispositif de positionnement de pièce (3 ; 3a à 3d) pour le positionnement de pièces à usiner (2) comprenant
-- un premier socle de base (9),
-- un support de pièce (7) et
-- une unité de pivotement du support de pièce (8 ; 8a à 8d) qui est disposée entre le premier socle de base (9) et le support de pièce (7), et
- un dispositif de positionnement d'outil (4 ; 4a à 4d) pour le positionnement des outils (20) prévus pour l'usinage des pièces (2) comprenant
-- un second socle de base (23 ; 23a à 23d),
-- un support d'outil (21 ; 21a à 21d) et
-- une unité de pivotement du support d'outil (22 ; 22a à 22d) qui est disposée entre le second socle de base (23 ; 23a à 23d) et le support d'outil (21 ; 21a à 21d) ;
**caractérisée en ce**
**que** l'unité de pivotement du support d'outil (8 ; 8a à 8d) est conçue de telle sorte que le support d'outil (7) peut être pivoté autour d'au moins trois, et au plus quatre, axes de pivotement du support d'outil (10, 14, 16 ; 10, 14, 16, 19),
**que** le support d'outil (21 ; 21a à 21d) est conçu en tant qu'unité de brochage de travail comprenant une broche de travail (32) pouvant être mise en rotation autour d'un axe de broche (34) et que l'unité de pivotement du support d'outil (22 ; 22b à 22d) est conçue de telle sorte que l'unité de brochage de travail (21 ; 21a à 21d) peut être pivotée au maximum autour de deux axes de pivotement du support d'outil (25, 28), et
**qu'**une unité de mesure de la position (42, 42b à 42d) est prévue pour la détermination d'une position absolue du support d'outil (7).

2. Installation d'usinage selon la revendication 1 **caractérisée en ce que** l'unité de pivotement du support d'outil (8 ; 8a à 8d) est conçue de telle sorte
- qu'une première partie de pivotement du support d'outil (11), disposée sur le premier socle de base (9), peut être pivotée autour d'un premier axe de pivotement du support d'outil orienté verticalement (10),
- qu'une deuxième partie de pivotement du support d'outil (13), disposée sur la première partie de pivotement du support d'outil (11), peut être pivotée autour d'un deuxième axe de pivotement de support d'outil orienté horizontalement (14),
- qu'une troisième partie de pivotement du support d'outil (17 ; 17a à 17d), disposée sur la deuxième partie de pivotement du support d'outil (13), peut être pivotée autour d'un troisième axe de pivotement du support d'outil (16) orienté horizontalement, et
- que le support d'outil (7) est disposé sur la troisième partie de pivotement du support d'outil (17 ; 17a à 17d).

3. Installation d'usinage selon les revendications 1 ou 2 **caractérisée en ce que** l'unité de pivotement du support d'outil (8) présente exactement trois axes de pivotement du support d'outil (10, 14, 16).

4. Installation d'usinage selon la revendication 3 **caractérisée en ce que** le support d'outil (7) est disposé de manière rigide sur la troisième partie de pivotement du support d'outil (17).

5. Installation d'usinage selon les revendications 1 ou 2 **caractérisée en ce que** l'unité de pivotement du support d'outil (8a à 8d) présente exactement quatre axes de pivotement de support d'outil (10, 14, 16, 19).

6. Installation d'usinage selon la revendication 5 **caractérisée en ce que** le support d'outil (7) peut être pivoté autour d'un quatrième axe de pivotement du support d'outil (19) disposé sur la troisième partie de pivotement du support d'outil (17a à 17d), où le quatrième axe de pivotement du support d'outil (19) est un axe central longitudinal de la troisième partie de pivotement du support d'outil (17a à 17d).

7. Installation d'usinage selon l'une des revendications 1 à 6 **caractérisée en ce que** l'unité de pivotement du support d'outil (22) est conçue de telle manière
- qu'une première partie de pivotement du support d'outil (24), disposée sur le second socle de base (23), peut être pivotée autour d'un premier axe de pivotement de support d'outil orienté horizontalement,
- qu'une deuxième partie de pivotement du support d'outil (27), disposée sur la première partie de pivotement du support d'outil (24), peut être pivotée autour d'un deuxième axe de pivotement de support d'outil orienté verticalement (28), et
- que le support d'outil (21 ; 21a) est disposé sur la deuxième partie de pivotement du support d'outil (27).

8. Installation d'usinage selon une des revendications 1 à 6 **caractérisée en ce que** l'unité de pivotement du support d'outil (22b à 22d) est conçue de telle manière
- qu'une partie de pivotement de support d'outil (24b à 24d) peut être pivotée autour d'un axe de pivotement de support d'outil (25) orienté verticalement par rapport au second socle de base (23b à 23d), disposée sur celui-ci, et
- que le support d'outil (21b à 21d) peut être pivoté autour d'un deuxième axe de pivotement de support d'outil (28) orienté horizontalement, disposé sur la partie de pivotement du support d'outil (24b à 24d).

9. Installation d'usinage selon l'une des revendications 1 à 8 **caractérisée en ce que** l'unité de pivotement du support d'outil (22 ; 22b à 22d) présente exactement deux axes de pivotement de support d'outil (25, 28).

10. Installation d'usinage selon l'une des revendications 1 à 9 **caractérisée en ce que** l'unité de mesure de la position (42 ; 42b à 42d)) est conçue comme une cinématique de mesure mécanique et que la cinématique de mesure mécanique est en particulier disposée de manière séparable du dispositif de positionnement de pièce (3 ; 3a à 3d).

11. Installation d'usinage selon la revendication 10 **caractérisée en ce que** la cinématique de mesure mécanique est disposée sur un socle support (57 ; 57c) qui est fixé conjointement avec le dispositif de positionnement du support de pièce (3b à 3d) et avec le dispositif de positionnement du support d'outil (4b à 4d) sur un socle inférieur (5) commun.

12. Installation d'usinage selon l'une des revendications 1 à 11 **caractérisée en ce que** soient prévus un magasin d'outils (66) et un changeur d'outils (71), agissant conjointement avec ce magasin et le support d'outil (21b à 21d) qui sont disposés ensemble avec le dispositif de positionnement du support de pièce (3b à 3d) et le dispositif de positionnement du support d'outil (4b à 4d) sur un socle inférieur commun (5).

13. Installation d'usinage selon l'une des revendications 1 à 12 **caractérisée en ce que** l'axe de la broche (34) de la broche de travail (32) peut être déplacé par rapport au carter de la broche (30).

14. Installation d'usinage selon l'une des revendications 1 à 13 **caractérisée en ce qu'**une unité de calcul (41) est prévue,
- laquelle est couplée avec l'unité de mesure de la position (42 ; 42b à 42d) et avec l'unité de la broche de travail, et
- laquelle est conçue de telle façon que des erreurs de positionnement du support de pièce (7) peuvent être compensées.

15. Installation d'usinage selon l'une des revendications 1 à 14 **caractérisée en ce qu'**une unité de calcul (41) comprenant un modèle de calcul du dispositif de positionnement de pièce (3 ; 3a à 3d) est prévue, les erreurs de positionnement du support de pièce (7) pouvant être reconnues et compensées au moyen du modèle de calcul.
